# EUROPEAN PATENT APPLICATION

(11) **EP 0 853 090 A1**
(43) Date of publication of application: **15.07.1998**
(21) Application number: 98100401.3
(22) Date of filing: 12.01.1998
(51) Int. Cl.: C08F 8/50, C08K 5/14, C08L 23/26

(54) **Polypropylene weight modification**

(30) Priority: 13.01.1997 US 785163
(71) Applicant: WITCO CORPORATION, Greenwich, CT 06831 (US)
(72) Inventor: Pettijohn, Ted M., Texas 75605 (US); Wells, Michael O., Texas 75605 (US); Pastorino, Ronald L., Connecticut 06897 (US)
(74) Representative: Grünecker, Kinkeldey, Stockmair & Schwanhäusser Anwaltssozietät

(57) **Abstract**

Di-amyl peroxide is used to reduce the molecular weight and narrow the molecular weight distribution of polypropylene thus improving its processability.

## Description

### BACKGROUND OF THE INVENTION

### 1) Field of the Invention

The present invention pertains to polypropylene and the modification of its molecular weight. More specifically, the Invention is directed to the use of di-amyl peroxide to reduce the molecular weight and narrow the molecular weight distribution of polypropylene thus enhancing processability and ultimate product quality. Importantly, the practice of the present invention can lead to significantly diminished levels of tert-butyl alcohol in the resultant polypropylene product than heretofore obtainable with peroxides commonly used for this purpose.

### 2) Description of the Priort Art

Polypropylene, despite its status as a commercially important commodity, has a reputation of being difficult to process. As produced by conventional methods, polypropylene typically has a high molecular weight and a broad molecular weight. distribution. These particular characteristics translate into high melt viscosity and high elasticity, which in turn adversely affect the ability to effectively and efficiently fabricate the polymer into finished products.

To redress this problem, extensive efforts have been made to alter polypropylene so as to improve its processability. The more commercially interesting of these have involved modifying the polymer post reactor, usually at that point of the processing scheme where the polypropylene is introduced into an extruder. It has been postulated in this regard that if the causative factor for intransigence in processing is the magnitude of the molecular weight and the breadth of the related distribution, then reductions in the same will necessarily result in ameliorated processability.

Principally, this type of polypropylene degradation has been accomplished through the use of free radicals, which are thought to effectuate chain scission on the polymer thus reducing its molecular weight and narrowing its molecular weight distribution. Free radicals for this purpose can be generated from oxygen, including atmospheric oxygen, in conjunction with high extruder temperatures, e.g. temperatures on the order of 370°-425°C. Alternatively, the requisite free radicals can be provided by peroxide initiators, which technique also enables the use of far lower extruder temperatures, e.g. 180°-240°C. For this and other reasons, the modification of polypropylene molecular weight by way of peroxides has become the methodology of industrial choice.

Peroxides employed in this regard are typically of the organic type, with dialkyl peroxides being the most commonly used. Generally, several considerations come into play when selecting a peroxide to serve as a practical candidate for any given polypropylene modification. Among these is the half-life of the peroxide at the temperature at which processing will occur. Half-life, i.e. the time it takes for one half of the peroxide to decompose, is an indicator of how quickly the peroxide can complete the polypropylene modification. The more important peroxides for commercial purposes have a half-life of about 1 hour at a temperature of from about 135°-155°C. Peroxides meeting this criterion include: bis(t-butylperoxy) diisopropyl benzene, dicumyl peroxide; 2,5-dimethyl-2,5-di(t-butylperoxy)hexane; di-t-butyl peroxide; and 2,5-dimethyl-2,5-di(t-butylperoxy)hexyne-3.

Another consideration in selecting a suitable peroxide is its volatility. If the peroxide is too volatile when exposed to the elevated temperatures of the extruder, it will vaporize before adequate amounts can be incorporated into the polypropylene to modify the same. This means that inordinate quantities of peroxide have to be supplied to the extruder in the first instance to make up for the shortfall that would otherwise inhere due to volatilization. While the use of increased amounts of peroxide creates problems upstream, e.g. more inefficient and complex handling and control, it creates more exigent problems downstream --namely, it increases the amounts of decomposition products that eventuate from the peroxide.

The types and amounts of decomposition products is a critical consideration when choosing a peroxide for polypropylene modification. Decomposition products typically generated by dialkyl peroxides can include: alcohols, ketones, saturated hydrocarbons, ethers, epoxides, carbon monoxide and carbon dioxide. These products can impair the ultimate quality of the polypropylene product being produced and oftentimes have to be removed during processing, which increases the complexity and cost of overall operations. And even if product quality is not an issue, government regulations set limits on certain of these decomposition products, dictating how much can be present in the final polypropylene product.

One of the more prevalent decomposition products --and one subject to strict government regulation-- is t-butyl alcohol. Indeed, the concern over t-butyl alcohol has been an impetus for research and development in this particular area, and has caused those peroxides especially prone to generating liberal amounts of t-butyl alcohol to fall out of favor with the industry. Among the latter is di-t-butyl peroxide which, unlike the more commonly used peroxides, has the distinction of bearing two t-butyl groups, each of which has the potential to evolve into t-butyl alcohol. Moreover, in addition to having a chemical structure which readily lends itself to begetting sizable quantities of t-butyl alcohol in the first instance, di-t-butyl peroxide is notoriously volatile: it thus demands a greater charge into the extruder which circumstance then creates proportionately more t-butyl alcohol. Separate and apart from this, the particular volatility associated with di-t-butyl peroxide renders the same unacceptably hazardous --in fact, potentially explosive-- under conventional operating conditions, which circumstance has accelerated its fall into industrial desuetude.

Given the detrimental effects of t-butyl alcohol in finished polypropylene products and the stringent requirements imposed by government establishing permissible levels of the same, attempts have been made to minimize or even totally eliminate t-butyl alcohol output. Among these is that which is reported in U.S. Patent No. 4,707,524 which purports to completely eliminate t-butyl alcohol emissions, exemplifying 0 ppm in this regard, by using either 2,2 di(t-amyl)peroxy propane or 3,6,6,9,9-pentamethyl-3 n-propyl-1,2,4,5 tetraoxacyclononane. These particular peroxides, however, are not available in quantities suited for or. at costs attractive to widescale commercial use. At present, one of the most popular peroxides for use in polypropylene molecular weight modification, due primarily to its accommodating half-life and its ready obtainability, is 2,5-dimethyl-2,5-di(t-butylperoxy)hexane. However, even this material generates not insignificant quantities of t-butyl alcohol and in any event is not inexpensive to employ.

The art thus recognizes a continuing need for peroxides that can be used to effectively modify the molecular weight of polypropylene, but which also generate a minimum of t-butyl alcohol and are cost efficient to use.

### SUMMARY OF THE INVENTION

The instant invention is a method to modify the molecular weight of polypropylene which satisfies the foregoing desiderata. The method comprises combining di-amyl peroxide with the polypropylene whereby the processing characteristics of the polymer are altered so to manifest melt flow and elasticity behavior more amenable to processing. Importantly, the practice of the invention results in levels of t-butyl alcohol less than 100 ppm, with levels as low as less than about 5 ppm obtainable in the resultant polypropylene product.

### BRIEF DESCRIPTION OF THE DRAWINGS

FIGURE 1 is a plot of peroxide concentration (wgt. %) needed to attain a given polypropylene melt flow (g/10 min.) using conventional 2,5-dimethyl-2,5di(t-butylperoy)hexane (DTBPH) and as practiced by the instant invention using di-tert-amyl peroxide (DTAP) as an embodiment thereof.

FIGURE 2 is a residual analysis plot, the measurements for which were made in accordance with the standard F.D.A. procedure entitled "Determination of tert-Butyl Alcohol in Polypropylene", showing the residual concentrations (ppm) of t-butyl alcohol (t-BuOH) and t-amyl alcohol (t-AmOH) for a given polypropylene melt flow when the instant invention was practiced using DTAP as molecular weight modifier.

FIGURE 3 is a residual analysis plot similar to that of FIGURE 2 only showing the residual concentrations of t-BuOH and t-AmOH for a given melt flow when conventional DTBPH was used as a molecular weight modifier.

FIGURE 4 is a residual analysis plot showing the residual concentrations of t-BuOH and t-AmOH for a given concentration of DTAP in accordance with the practice of present invention.

FIGURE 5 is a residual analysis plot showing the residual concentrations of t-BuOH and t-AmOH for a given concentration of DTBPH in accordance with conventional practice.

### DETAILED DESCRIPTION OF THE INVENTION

The method of polypropylene modification contemplated by the present invention is practiced by combining di-amyl peroxide with the polypropylene to be modified. Di-amyl peroxide in this regard includes those compounds having the generic formula R-O-C-R', where R and R' is each independently an alkyl group of five carbon atoms. Although R and R' are each comprised of an amyl (pentyl) group, they may nonetheless each be of different isomeric forms, e.g., n-amyl, iso-amyl, tert-amyl etc. The preferred di-amyl peroxide is di-tert-amyl peroxide (DTAP).

Quantitatively, the amount of di-amyl peroxide employed in the practice of the present invention may vary but is in any event employed in an amount effective to reduce the molecular weight and narrow the molecular weight distribution of the subject polypropylene, thus improving processability of the same while concurrently resulting in a polypropylene product that has less than 100 ppm t-butyl alcohol. In the exercise of the present invention, it is possible to obtain even deeper reductions in t-butyl alcohol, even as low as less than about 5 ppm.

Generally, up to about 0.4 weight % of di-amyl peroxide is employed, as based on the weight of polypropylene inclusive of fillers, stabilizers and other additives which may be present. Preferably, about 0.01 weight % to about 0.2 weight % di-amyl peroxide is combined with the polypropylene. As appreciated by those of skill in the art, the reduction of molecular weight and the narrowing of molecular weight distribution is controlled by the amount of peroxide employed.

The di-amyl peroxide may be combined with the propylene in any conventionally known manner that is suited to the task. Thus without limiting the ways in which the present invention may be effectuated, the peroxide can be separately admixed with the polypropylene, the resulting admixture then typically being melted and extruded at temperatures of from about 180°C to about 280°C so to obtain a polypropylene product. More preferred extruder temperatures are about 180° to about 240°C. The admixing can be performed at ambient temperature or at elevated temperatures of about 25° to about 240°C.

In another variation, the peroxide can be directly introduced into an extruder wherein polypropylene is already present or is being simultaneously fed. As appreciated by those of skill in the art, inert atmospheres and purges, such as provided by nitrogen gas, is preferred throughout the mixing and extruding processes.

In one particular embodiment, the peroxide can be preblended with a suitable solvent, such as odorless mineral spirits and the like, to facilitate eventual combination with polypropylene. The preblended solution can contain up to about 95% peroxide, more preferably about 20% to about 80% peroxide.

While in the present invention, di-amyl, peroxide can be exclusively used to modify the molecular weight of polypropylene, the present invention also contemplates the use di-amyl peroxide with at least one other molecular weight modifier so as to improve the processability of polypropylene. Other molecular weight modifiers in this regard include those conventionally employed in the art for this purpose, especially, but without limitation, the various peroxides that are thus known, such as 2,5-dimethyl-2,5-di(t-butylperoxy)hexane. In the practice of this optional aspect of the invention, the other modifier or modifiers can be separately added to the polypropylene, or can be admixed with the di-amyl, peroxide before or during inclusion into the propylene polymer. Preblending with a suitable solvent as hereinbefore described is preferred.

Polypropylene as contemplated by the present invention includes polypropylene homopolymer and copolymers made with up to about 40% weight ethylene

The following examples are offered to illustrate, without limiting, the practice of the invention. Variations apparent to those of skill in the art on the methodology employed are also within the scope of the invention.

### EXAMPLES

The procedure utilized in conducting the examples appearing hereinafter was as follows:

A Haake laboratory scale extruder (Model Rheomex TW-100) was used for all extrusions. The screw speed was 35 rpm and zone temperatures were 220°C. Stabilized, virgin polypropylene resin (obtained from Philllips-Sumika) was extruded without peroxide in order to clean the system and remove trace Contaminants.

Polypropylene samples for modification studies were prepared by adding the appropriate amount of peroxide (as a 45% solution in odorless mineral spirits) to a fresh 500 gram sample of the polypropylene resin (initial melt flow was about 8 g/10 min). The sample containing peroxide was thoroughly mixed in a closed glass container to insure a homogeneous dispersion of peroxide.

The resin sample was extruded, cooled using a water bath and pelletized. Melt flow analysis was performed as per ASTM D-1238.

Residual decomposition product analysis was completed by Polyhedron Laboratories, Houston, Texas using the standard FDA procedure entitled "Determination of tert-Butyl Alcohol in Polypropylene".

### EXAMPLE 1

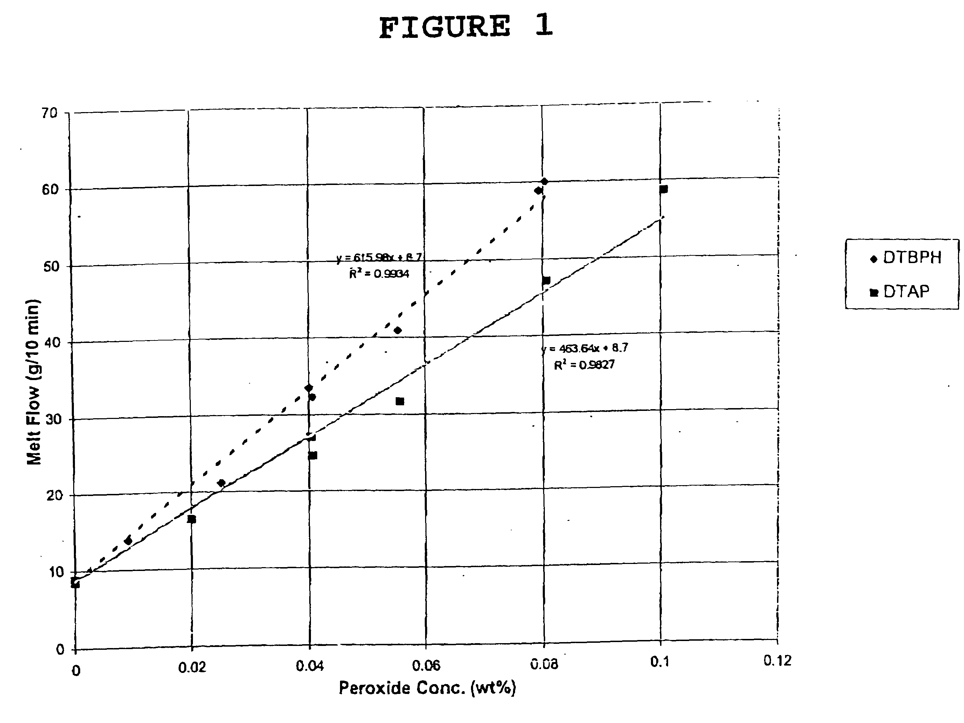

polypropylene was modified pursuant to the instant invention using the following weight percentages of di-tert-amyl-peroxide, (DTAP), obtainable from Witco Chemical Corporation: 0.02%, 0.04%, 0.045%, 0.08% and 0.1%. The melt flow (g/10 min.) of the polypropylene that resulted from each run was then measured. The relationship was plotted and is shown at Figure 1.

### EXAMPLE 2

Polypropylene was modified with the conventional and commonly used peroxide 2,5-dimethyl-2,5-di(t-butylperoxy)hexane (DTBPH) commercially obtained using the following weight percentages: 0.015%, 0.025%, 0.04%, 0.045% and 0.08%. The melt flow (g/10 min.) of the polypropylene that resulted was measured. The relationship was plotted and is shown at Figure 1.

### EXAMPLE 3

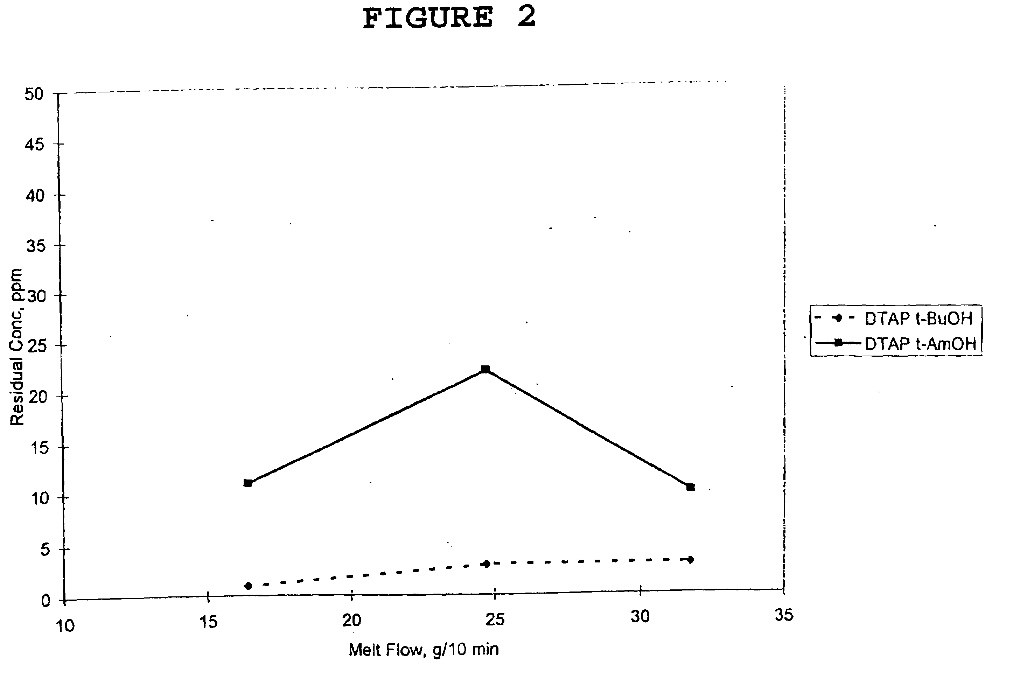

Residual concentration (ppm) of t-butyl alcohol (t-BuOH) and t-amyl alcohol (t-AmOH) for polypropylene modified in accordance with Example 1 using DTAP was measured and plotted against melt flow (g/10 min.). The relationship is shown at Figure 2.

### EXAMPLE 4

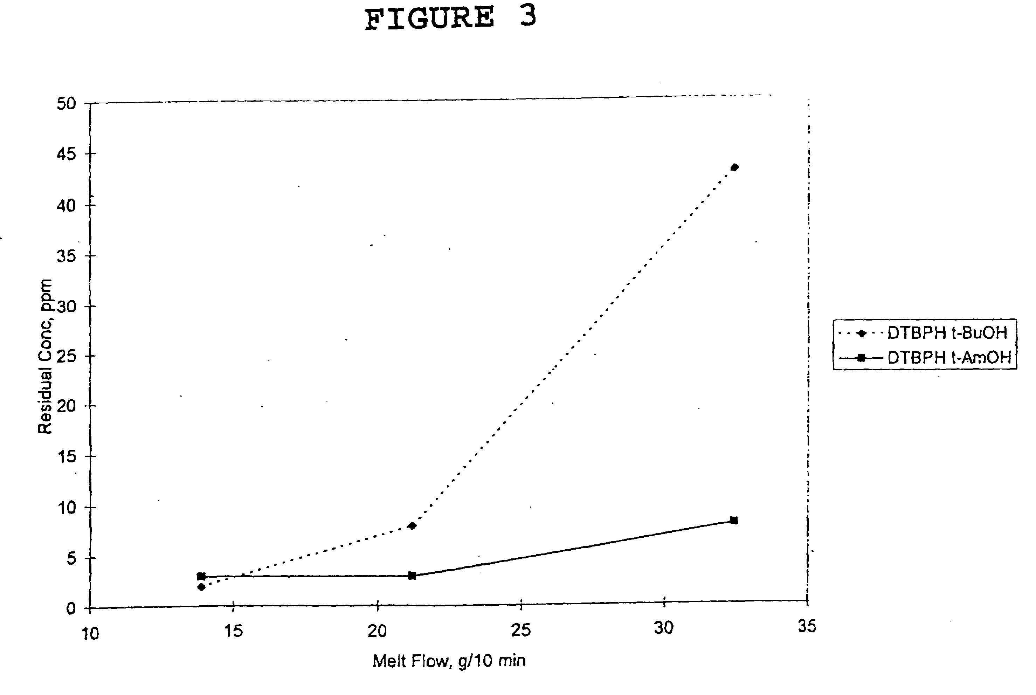

Residual concentration (ppm) of t-BuOH and t-AmOH for polypropylene modified in accordance with Example 2 using conventional DTBPH was measured and plotted against melt flow (g/10 min.). The relationship is shown at Figure 3.

### EXAMPLE 5

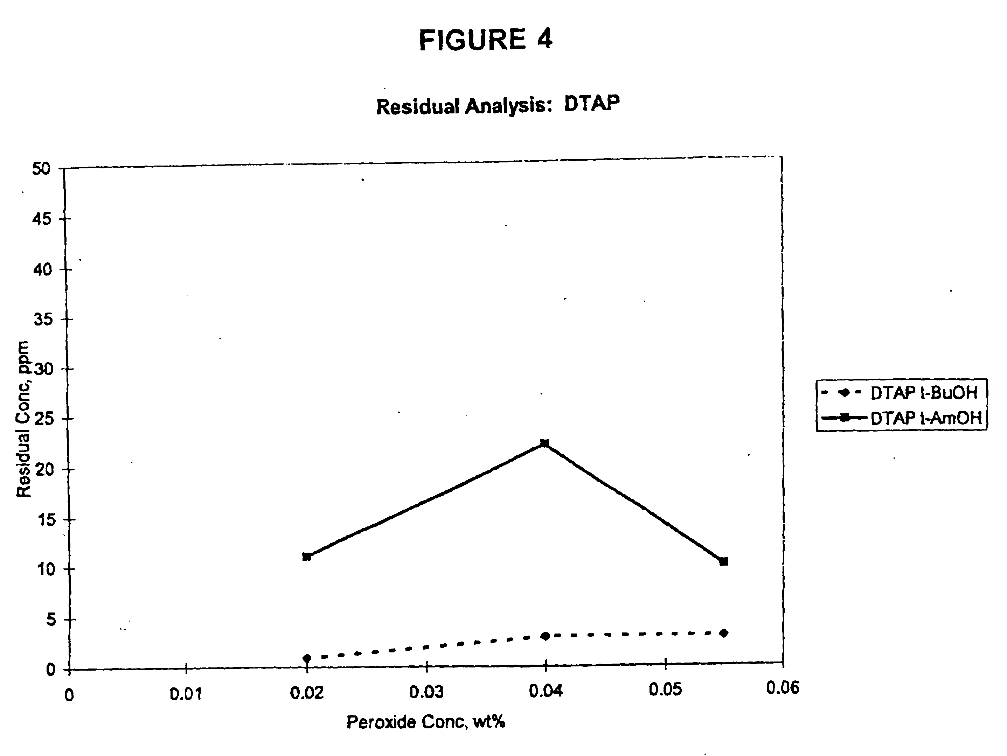

Polypropylene was modified pursuant to the instant invention using the following weight percentages of DTAP: 0.02%, 0.04%, and 0.055%. The residual concentration (ppm) of t-BuOH and t-AmOH for the thus modified polypropylenes was measured and plotted against the aforesaid DTAP concentrations. The relationship is shown at Figure 4.

### EXAMPLE 6

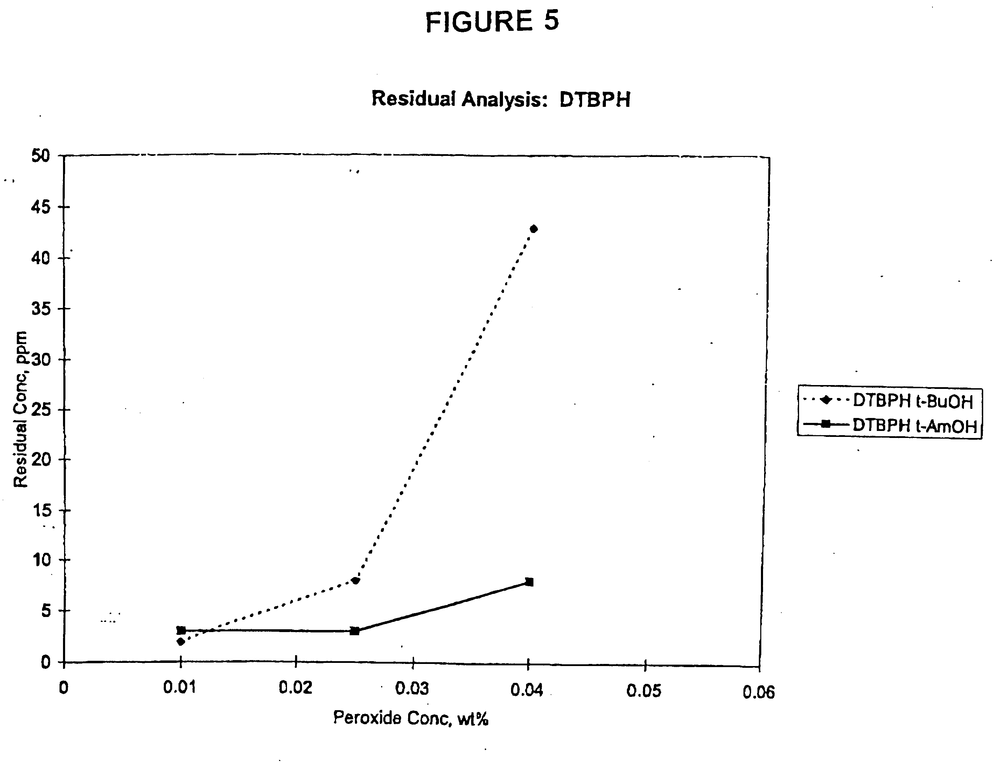

Polypropylene was modified with conventional DTBPH using the following weight percentages: 0.01%, 0.025% and 0.04%. The residual concentration (ppm) of t-BuOH and t-AmOH was measured for the thus modified polypropylenes and plotted against the aforesaid DTBPH concentrations. The relationship is shown at Figure 5.

As shown by Figure 1, the same melt flow can be obtained using either DTBPH as conventionally practiced, or by using the method of the present invention employing DTAP. And while slightly more DTAP concentration was needed to attain the same melt flow as when DTBPH was used, reference to the residual analysis plots of Figures 2 and 3 shows that notwithstanding the greater concentration of peroxide in the first instance, dramatically reduced levels of t-BuOH were present in the propylene product modified by the present invention.

Reference to Figure 2 in this regard, representing the inventive practice, shows a t-BuOH level of about 1-3 ppm whereas Figure 3, representing the use of conventional DTBPH, shows a t-BuOH level that rapidly increases to over 40 ppm in the same melt flow range. Similarly, reference to Figures 4 and 5 shows that at when DTAP and DTBPH are used at the same concentrations, far less t-BuOH is generated with DTAP than with DTBPH. Indeed, reference to Figure 5 shows that a steep escalation of t-BuOH concentration occurs as more DTBPH is used. For example, the Figure shows that t-BuOH concentration jumps from about 6 to about 43 ppm when DTBPH concentration is increased from 0.02% to 0.04%. In contrast, Figure 4 shows that t-BuOH concentration remains remarkably constant and at less than 5 ppm when the amount of DTAP is similarly increased from 0.02 to 0.04 weight %.

### EXAMPLE 7

This example demonstrates that practice of the present invention wherein DTAP is used in conjunction with another molecular weight modifier. Here, a blend of DTAP and conventional DTBPH was used to modify polypropylene; the results were compared to the separate use of DTAP and DTBPH at the same weight percentage as that for the blend.

Polypropylene was modified using the procedure hereinbefore described but for the fact that the initial melt flow was 4 g/10 min.

In Run No. 1, polypropylene was modified in accordance with the present invention using 0.07 weight % DTAP. The resulting melt flow and t-BuOH and t-AmOH concentrations were measured and are reported in the Table below.

In Run No. 2, polypropylene was modified in accordance with another aspect of the present invention using a blend of DTAP and DTBPH. In this Run, a 50-50 blend of DTAP and DTBPH was employed. The blend was prepared using 0.35 weight % DTAP and 0.35% weight % DTBPH, for a total peroxide concentration of 0.07 weight %; it was added to the polypropylene as a 45% solution in odorless mineral spirits. The resulting melt flow and t-BuOH and t-AmOH concentrations were measured and are reported in the Table below.

In Run No. 3, polypropylene was modified using 0.07 weight % conventional DTBPH. The resulting melt flow and t-BuOH and t-AmOH concentrations were measured and are reported in the Table below.

**TABLE**

| **RUN** | **Peroxide (wt%)** | | **Melt Flow (g/10 min)** | **t-BUOH (ppm)** | **t-AMOH (ppm)** |
|---|---|---|---|---|---|
| | **DTAP** | **DTBPH** | | | |
| 1 | 0.070 | - | 31 | <1 | 5 |
| 2 | 0.035 | 0.035 | 40 | 6 | 6 |
| 3 | - | 0.070 | 49 | 12 | 6 |

Reference to the Table shows that when DTAP is blended with a conventional molecular weight modifier, DTBPH being exemplified, the melt flow of the resultant modified polypropylene is increased over that which is obtained when DTAP is used alone: compare Run 1 to Run 2 wherein the melt flows are 31 and 40 g/10 min, respectively. Significantly, however, the amount of t-butyl alcohol generated from using the blend under these circumstances is only 6 ppm, which is one half of that created when conventional DTBPH is used alone: compare Run 2 to Run 3 wherein the t-BuOH concentrations are 6 and 12 ppm, respectively.

## Claims

1. A method of modifying polypropylene which comprises combining di-amyl peroxide with polypropylene.

2. The method of Claim 2 wherein said di-amyl peroxide is combined at up to about 0.4 weight % based upon the weight of said polypropylene.

3. The method of Claim 2 wherein said di-amyl peroxide is combined at from about 0.01 weight % to about 0.2 weight % based upon the weight of said polypropylene.

4. The method of Claim 1 wherein said di-amyl peroxide is di-tert-amyl peroxide.

5. A method of improving the processability of polypropylene which comprises admixing di-tert-amyl peroxide, and optionally at least one other molecular weight modifier, with polypropylene; melting the admixture; and forming a polypropylene product having reduced molecular weight, a narrower molecular weight distribution and less than 100 ppm t-butyl alcohol.

6. The method of Claim 5 wherein said di-tert-amyl peroxide is admixed in an amount of up to about 0.4 weight % based upon the weight of said polypropylene.

7. The method of Claim 6 wherein said di-tert-amyl peroxide is admixed in an amount of about 0.01 to about 0.2 weight % based upon the weight of said polypropylene.

8. The method of Claim 5 wherein said other molecular weight modifier is 2,5-dimethyl-2,5-di(t-butylperoxy)hexane.

9. The method or Claim 5 wherein said di-tert-amyl peroxide and said optional at least one other molecular weight modifier are admixed with said polypropylene as a blend.

10. The method of Claim 9 wherein said blend comprises about 50% by weight di-tert-amyl peroxide and about 50% by weight of said at least one other molecular weight modifier based upon the weight of said polypropylene.

11. The polypropylene that has been modified in accordance with the method of Claim 1.
